Europäisches Patentamt

European Patent Office

Office européen des brevets

(19)

(11) Publication number: **0 028 925**
**B1**

(12) **EUROPEAN PATENT SPECIFICATION**

(45) Date of publication of patent specification: **08.08.84**

(51) Int. Cl.³: **C 02 F 1/50, C 25 B 1/46**

(21) Application number: **80303982.5**

(22) Date of filing: **06.11.80**

(54) **Method of and generator for generation of chlorine-chlorine dioxide mixtures, chlorinating system and method.**

(30) Priority: **08.11.79 US 92645**
**13.02.80 US 121115**

(43) Date of publication of application:
**20.05.81 Bulletin 81/20**

(45) Publication of the grant of the patent:
**08.08.84 Bulletin 84/32**

(84) Designated Contracting States:
**DE FR GB NL**

(56) References cited:
**FR - A - 1 520 272**
**US - A - 3 669 857**
**US - A - 4 062 754**

(73) Proprietor: **Sweeney, Charles Timothy**
**448 Earle Road**
**Hewitt Texas 76643 (US)**

(72) Inventor: **Sweeney, Charles Timothy**
**448 Earle Road**
**Hewitt Texas 76643 (US)**

(74) Representative: **Szczuka, Jan Tymoteusz et al,**
**Cruikshank & Fairweather 19 Royal Exchange**
**Square**
**Glasgow G1 3AE Scotland (GB)**

Courier Press, Leamington Spa, England.

## Description

This invention relates to new and useful improvements in electrolytic generators and to methods of generating mixtures of chlorine and chlorine dioxide and to systems of apparatus for generating mixtures of chlorine and chlorine dioxide for treating bodies of water, such as swimming pools, baths, reservoirs, sewage, etc., and for bleaching chemical pulp, etc. In particular the invention relates to a chlorine-containing gas generator comprising an electrolytic cell containing an electrolyte comprising an aqueous solution of a soluble chloride salt and having an anode and a cathode disposed in an anode compartment and a cathode compartment, respectively, on either side of a permeable membrane.

The use of chlorine for disinfecting bodies of water, such as swimming pools, baths, reservoirs, sewage, etc. is well known. In the past, chlorine has usually been supplied by direct application of chlorine gas from tanks containing the gas under pressure. There have also been a number of attempts to provide chlorine gas on a more limited scale by continuous electrolytic generating equipment.

The use of chlorine dioxide in disinfecting bodies of water and in bleaching chemical pulp is well known. Chlorine dioxide is a dangerous and explosive gas and is usually produced as an aqueous solution at the point of usage by chemical decomposition of chlorite salts. The production of chlorine dioxide electro-chemically from chlorides is unknown in the literature.

In "The $ClO_2$ content of chlorine obtained by electrolysis of NaCl", Electrochemical Technology 5, 56—58 (1967), Western and Hoogland report that $ClO_2$ is not produced in the electrolysis of NaCl in the absence of chlorates.

It is an object of the present invention to avoid or minimize one or more of the above disadvantages and in particular to provide a system producing chlorine containing mixtures in a simple and effective manner.

In general the production of chlorine and chlorine/chlorine dioxide mixtures is achieved with the present invention by the use of an electrolytic generator of the type consisting of at least two sealed compartments, separated by an ion-permeable membrane, having a cathode in one compartment and an anode in the other compartment. On electrolysis of a chloride salt solution, hydrogen is evolved from the cathode compartment and a chlorine containing mixture from the anode compartment for use in bleaching or in treating bodies of water, such as swimming pools, baths, reservoirs, sewage, etc. In accordance with the present invention an electrically neutral (bipolar) electrode (one not connected in the anode-cathode circuit) it positioned adjacent to the anode or between the anode and the cathode adjacent to the ion-permeable membrane in the anode compartment. The electrically neutral (bipolar) electrode is positioned in line between the anode and the cathode.

US—A—3,669,857 discloses a chlorine-containing gas generator comprising an electrolytic cell containing an electrolyte comprising an aqueous solution of a soluble chloride salt and having an anode and a cathode disposed in an anode compartment and a cathode compartment, respectively, on either side of a permeable membrane.

According to the present invention the membrane is ion-permeable and the cell includes a bipolar electrode positioned in said anode compartment, said bipolar electrode being of a size and shape so as to permit free circulation of the aqueous electrolyte therearound and being disposed so as to be exposed on all sides to said aqueous electrolyte.

The invention also provides a method of producing chlorine and/or chlorine dioxide by electrolysis of an aqueous solution of a soluble chloride salt in an electrolytic cell in which the anode and cathode are disposed in anode and cathode compartments on either side of a permeable membrane characterized in that the cell includes a bipolar electrode positioned in said anode compartment and maintained at a potential lower than said anode relative to said cathode, said bipolar electrode being of a size and shape such that it is completely surrounded by aqueous electrolyte of the said anode compartment, said chlorine dioxide and/or chlorine being produced in said anode compartment.

In another aspect the invention provides a method of chlorinating a body of water which comprises providing a chlorine and/or chlorine dioxide-containing gas generator comprising a hollow container having a wall dividing the same into two compartments and including a permeable membrane permitting a flow of cations therethrough, a cathode in one of said compartments, an anode in the other of said compartments, a bipolar electrode in said other compartment positioned between said anode and said membrane, said bipolar electrode being of a size and shape permitting free circulation of electrolyte therearound and being exposed on all sides to the same aqueous electrolyte, providing water to said cathode compartment, providing an aqueous solution of a chloride salt to said anode compartment to surround said anode and said bipolar electrode, passing a predetermined amount of direct current through said water and said aqueous chloride salt solution to produce chlorine and/or chlorine dioxide at said anode and said bipolar electrode and to produce hydrogen and sodium hydroxide at said cathode, collecting said chlorine and/or chlorine dioxide, and mixing said chlorine and/or chlorine dioxide at a predetermined rate with part of said body of water and returning the resulting mixture to said body of water.

In a further aspect the invention provides a chlorinating system comprising a conduit for conducting water, gas-water mixing means disposed in said conduit for flow of water through said mixing means, and a chlorine-containing gas generator connected to said mixing means for introducing chlorine and/or chlorine dioxide thereto, characterized in that said generator is a chlorine-containing gas generator of the invention.

The anode, cathode and electrically neutral (bipolar) electrode are preferably flat plate electrodes, although other configurations, such as cylindrical electrodes may be used.

The system of the invention is characterized by a more rapid start up when energized with electricity. The system is further characterized by generating a mixture of chlorine and chlorine dioxide at both the anode and the neutral (bipolar) electrode, and under some conditions may produce substantially pure chlorine dioxide.

Further preferred features and advantages of the invention will appear from the following description given by way of example of some preferred embodiments of the invention illustrated with reference to the accompanying drawings in which:

Figure 1 is a schematic view of a treatment system for a body of water using an electrolytic generator of the invention for producing a chlorine-containing mixture;

Figure 2 is a schematic view, in elevation, of a preferred embodiment of the electrolytic generator to be used in the system shown in Figure 1;

Figure 3 is a plan view of the electrolytic generator shown in Figure 2;

Figure 4 is a plan view of another embodiment of electrolytic generator having a plurality of neutral (bipolar) electrodes;

Figure 5 is a plan view of another embodiment of electrolytic generator having a plurality of neutral (bipolar) electrodes aligned in series;

Figure 6 is a plan view of still another embodiment of electrolytic generator having a plurality of neutral (bipolar) electrodes and an anode of diminishing size;

Figure 7 is a plan view of still another embodiment of electrolytic generator having a plurality of neutral electrodes and anode of increasing size;

Figure 8 is a plan view of still another embodiment of electrolytic generator having a cylindrical cathode and flat plate electrodes and an anode;

Figure 9 is a plan view of still another embodiment of electrolytic generator in which the cathode and the neutral (bipolar) electrode are cylindrical;

Figure 10 is a plan view of still another embodiment of electrolytic generator in which the cathode, anode and neutral (bipolar) electrode are all cylindrical in shape;

Figure 11 is a schematic plan view of another embodiment of electrolytic generator in which the neutral (bipolar) electrodes are positioned adjacent to the anode.

Figure 12 is a schematic plan view of another embodiment of electrolytic generator in which a plurality of neutral (bipolar) electrodes are positioned side-by-side between the anode and cathode;

Figure 13 is a schematic plan view of another embodiment of electrolytic generator in which the neutral (bipolar) element is separated from the anode and cathode compartments by ion-permeable membranes;

Figure 14 is a schematic view of a cylindrical electrolytic generator;

Figure 15 is a schematic view, in elevation, of still another embodiment of electrolytic generator having a pair of cathodes and a pair of anodes; and

Figure 16 is a schematic view of one apparatus for use in the introduction of a chlorine-containing mixture into a stream of water leading to the venturi mixer in the treatment system shown in Figure 1.

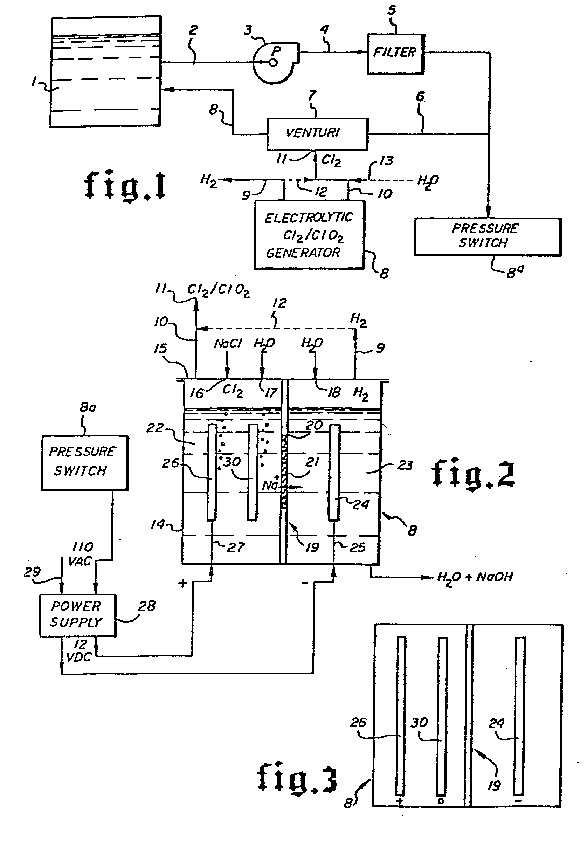

Referring to Figure 1, there is shown a system for treatment of a body of water, such as a swimming pool, bath, reservoir, body of sewage, etc. A body of water 1 is connected by a conduit 2 to a pump 3. The outlet side of pump 3 is connected by conduit 4 to a filter 5. The other side of filter 5 is connected by conduit 6 to the inlet side of the venturi mixer 7, the outlet side of which is connected by conduit 8*b* back to the body of water 1. The system shown provides for circulation of water from the body of water 1 by pump 3 accompanied by filtration in filter 5 and mixing in venturi mixer 7 before the water is returned to the main body of water 1. The system includes an electrolytic generator 8 which will be described more fully hereinafter.

Electrolytic generator 8 produces a hydrogen in the cathode compartment which is discharged as is indicated at 9. The generator produces a chlorine/chlorine dioxide mixture in the anode compartment which is discharged as indicated at 10 and introduced into the venturi mixer 7 as indicated at 11. Optionally, the hydrogen produced in the chlorine generator may be mixed with the chlorine/chlorine dioxide mixture as indicated at 12 and introduced as a mixture into the venturi mixer 7.

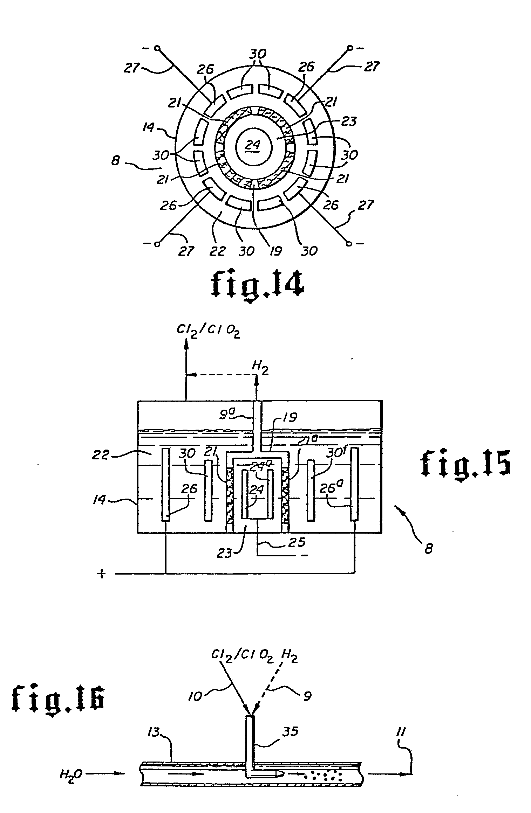

Also, the mixture of chlorine dioxide and chlorine (optionally including hydrogen) may be mixed with a stream of water as indicated at 13 (also see Figure 16) for introduction into the venturi mixer 7. The introduction of water as indicated at 13 may be in any conventional conduit system or may be in the form of a water-gas aspirator system in which the flow of water sucks in the mixture of chlorine dioxide and chlorine (and optionally hydrogen) gas discharged from chlorine generator 8. Systems of this general type which produce only chlorine are shown in Lindsteadt U.S. Patent 2,887,444.

Murray U.S. Patent 3,223,242 and Yates U.S. Patent 4,097,356.

The apparatus as shown can be operated in conjunction with conventional timing circuits and may also be operated in conjunction with switches that are energized simultaneously with the water circulating pump, or the electrolytic generator may be energized in response to a flow switch or a pressure switch 8a so that it operates whenever water is circulating through the system shown in Figure 1.

The electrolytic generator 8, shown schematically in Figure 1, is of an improved design, as shown in Figure 2 and subsequent figures of the drawings. The preferred embodiment of the chlorine generator 8, as shown in Figure 2, produces a mixture of chlorine dioxide and chlorine gas.

In Figure 2, electrolytic generator 8 consists of a hollow container 14 having a removable cover 15 sealed in place and having an opening 16 for introduction of a chloride salt (NaCl), and openings 17 and 18 for introduction of water. Hollow container 14 is divided by a vertically extending wall 19 which has a window opening 20 in which there is positioned ion-permeable membrane 21 which conducts cations, e.g. Na$^+$, preferably of the type conventionally used in electrolytic cells provided with membrane separation of the anode and the cathode compartments. The preferred membranes are fluorinated polymers, e.g. perfluorosulfonic acid polymers, such as NAFION Registered Trademark manufactured by Dupont.

Wall member 19 including membrane 21 divides the interior of container 14 into an anode compartment 22 and a cathode compartment 23. A cathode 24 is positioned in cathode compartment 23 and connected by electric lead 25 to a point external to container 14. Anode 26 is positioned in anode compartment 22 and is connected by electric lead 27 to a point external to container 14. The apparatus is provided with a power supply, such as a transformer 28 powered by 110 volt power source 29 and providing a 12 volt D.C. output connected to electric leads 25 and 27. An electrically neutral (bipolar) electrode 30 is positioned in anode compartment 22 in a direct line between anode 26 and cathode 24 and adjacent to ion-permeable membrane 21. Electrode 30 is electrically neutral (bipolar) in the sense that it is not connected by lead wire to the electric circuit energizing the anode 26 and cathode 24 to effect electrolytic decomposition of a salt solution.

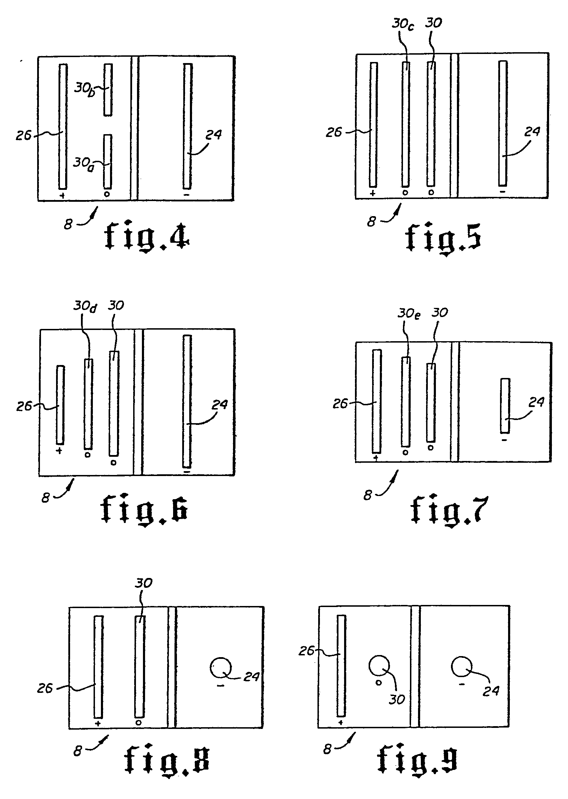

In Figure 3, which is a plan view of the chlorine generator 8, the plate-like construction of the various electrodes 24, 26 and 30 is seen. It has been found experimentally that better yields are obtained by increasing the effective area of the anode. Thus, flat-plate electrodes are preferred in the chlorine generator of this invention, although in some applications cylindrical electrodes or other shapes may be used. The cathode 24 is preferably a flat-plate of steel or the like. The anode 26 and the electrically neutral (bipolar) electrode 30 are preferably flat-plates of carbon.

Operation

The electrolytic generator described and shown in Figures 2 and 3 has been tested and found to be a substantial improvement over more conventional electrolytic chlorine generators.

In the electrolytic generator shown, the cell is charged with water in both the anode compartment 22 and the cathode compartment 23 to a level above the top of the various electrodes but leaving a sufficient space at the top for the collection of gases. Common table salt (NaCl) was added to the water in the anode compartment. In carrying out this process, any soluble chloride salt may be used, e.g. NaCl, KCl, LiCl, RbCl, CsCl, NH$_4$Cl, MgCl$_2$, CaCl$_2$, etc., although for economic reasons sodium chloride is preferred. The ion-permeable membrane 21 in the cell was a NAFION (Trademark) membrane from the Dupont company. Neutral (bipolar) electrode 30 was placed approximately 2.5 cms from the membrane. 12 volt D.C. were applied and monitored by a D.C. ampmeter in the circuit.

The system was turned on. The current flow was 0.250 amp; voltage readings of the solution were nearly constant throughout the anode compartment. This indicated that the anode compartment represented a single uniform resistance relative to the cathode. A potential difference between the anode and the neutral (bipolar) electrode was 0.9 volts D.C. There was immediate, visible generation of hydrogen at the cathode. At this current level, there is a substantial lag in the production of chlorine. After a short period of time, however, gas begins to form at both the anode 26 and the neutral (bipolar) electrode 30. The gas produced at the anode 26 and the neutral (bipolar) electrode 30 was unexpectedly found to consist of a mixture of chlorine and chlorine dioxide. The proportions of Cl$_2$ and ClO$_2$ varied under different conditions of operation and in some cases the ClO$_2$ is present in a substantial excess over the Cl$_2$. When the current is increased to about 10—11 amp for full production, there is vigorous generation of the gas mixture at the anode 26 and the neutral (bipolar) electrode 30. When operating at full voltage and full current there is a substantial and measurable potential measured across the three electrodes in the cell. The neutral (bipolar) electrode 30 is at a potential of about 8 volts relative to the cathode. The potential in the brine between the neutral (bipolar) electrode 30 and anode 26 is about 10 volts. Anode 26 is at a potential of 12 volts relative to cathode 24.

Under the conditions of operation described above, there is vigorous generation of hydrogen at cathode 24 and a rapid production of sodium hydroxide in cathode compartment 23. Sodium hydroxide is the natural product obtained when the sodium ions passing through ion-permeable membrane 21 are neutralized at cathode 24. The resulting product is sodium metal which is almost instantly converted into sodium hydroxide with evolution of hydrogen. At the same time, there is vigorous generation of the gas mixture in the anode compartment 22 at both the neutral (bipolar) electrode 30 and the anode 26. The evolution of gas commences almost immediately compared to a relatively long induction period for production of chlorine in conventional electrolytic chlorine generators.

In the start up of a chlorine generator, there is usually a substantial induction, or lag time which results from the low conductivity in the cathode compartment. Usually, the operation of the cell is relatively slow until sufficient sodium ions have been converted into sodium hydroxide at the cathode 24 and the caustic solution has reached a sufficient level of concentration to be highly electrically conductive. Likewise, in the anode compartment, there is usually an induction, or lag time resulting from the solubility of chlorine in water, particularly when the chlorine is generated slowly. In this improved electrolytic generator there is a more rapid build up of sodium hydroxide in the cathode compartment as a result of the short distance that the sodium ions must travel from the neutral (bipolar) electrode 30 to pass through ion-permeable membrane 21. Also, in this generator, the generation of the gas mixture at anode 26 and neutral (bipolar) electrode 30 is so vigorous that there is an almost immediate generation of gas from the cell. The productivity of this cell was initially evaluated using the DPD colorimetric method of measuring residual chlorine in water. Data showed that, at worst cell operating conditions and no temperature problems, production of 454 g. of chlorine-containing gas per day was easily obtained at a current of 11 amp and only 23 litres of brine solution. There was no long loss of time for start up and waiting for solutions to be concentrated with salt or caustic levels to rise. In conventional electrolytic chlorine generators the lag time in start up has often been days.

In later experiments, the production of gas in the anode compartment seemed to be greater than theoretical. It was then that $ClO_2$ was discovered as a significant component of the gas produced. The anode compartment gas was collected and bubbled through an absorber for chlorine and the residue analyzed for $ClO_2$ content. The $ClO_2$ was found to be the major constituent of the gas produced in the anode compartment at both the anode 26 and the neutral (bipolar) electrode 30.

In experimental work carried out with this electrolytic generator cell, a number of important observations were made. The resistance of the anode compartment is directly related to the distance of the anode to the cathode and the saturation of salt in the electrolytic solution. The production of the gas mixture at the anode and the neutral (bipolar) electrode and the production of hydrogen at the cathode are directly related to the surface area of these electrodes and the current density. With a greater area of anode surface and neutral (bipolar) electrode surface and a higher current, more gas production occurs. The current flow however is limited by the resistance of the solution in the anode compartment and the rate of flow of sodium ions through ion-permeable membrane 21. The rate of flow of sodium ions through the membrane is also directly related to the caustic level of sodium hydroxide in the solution in cathode compartment 23 and is also related to the area of ion-permeable membrane 21.

By placing neutral (bipolar) electrode 30 in the cell and locating the electrode in line between cathode 24 and anode 26 adjacent to ion-permeable membrane 21, substantial advantages are obtained. Neutral (bipolar) electrode 30 acts as an anode relative to cathode 24 and also acts as a cathode relative to anode 26. In this manner, neutral (bipolar) electrode 30 assists in effecting a rapid transfer of sodium ions to cathode compartment 23 and improves the rate of build up of caustic in that compartment. It also functions to improve the $Cl_2/ClO_2$ output and to reduce the induction period or start up time for the cell.

Tests carried out with this equipment using 15 cm×30 cm cathode, 15 cm×30 cm×5 cm anode, 15 cm×30 cm×5 cm neutral (bipolar) electrode and a 6.3 cm×20 cm ion-permeable membrane has shown that once the cell is saturated with salt a high $Cl_2/ClO_2$ output can be maintained with a small membrane area being used efficiently. The optimum size for the ion-permeable membrane 21 is probably an area not substantially greater than the area required to conduct the maximum current used in the $Cl_2/ClO_2$ generator cell. The cathode 24, anode 26 and neutral (bipolar) electrode 30 are preferably about the same surface area. Some difference in surface area may be used in certain specialized applications as will be described in connection with certain of the alternate embodiments of this invention.

The removal of $Cl_2/ClO_2$ mixture and hydrogen and of caustic solution from the chlorine generator cell 8 is shown schematically, as is the introduction of water and table salt to the generator. Specific construction involves conventional structure in electrolytic cells and in gas recovery from such cells. The collection of hydrogen and of the $Cl_2/ClO_2$ mixture may involve simple gas collection apparatus and may, if desired, involve the use of systems for mixing the hydrogen and $Cl_2/ClO_2$ gas mixture with water for introduction into a body of water as described in connection with Figure 1 above. Also, the equipment can be used in association with timers or in connection with flow controlling switches or controls or in connection with pressure responsive switches and controls as is well known in the prior art.

In Figures 4 to 13 there are shown a number of alternate embodiments of the chlorine/chlorine dioxide generator shown in Figures 2 and 3. In these views, the chlorine/chlorine dioxide generator is shown in plan view as in Figure 3 and is illustrated in a variety of forms using different arrangements of neutral (bipolar) electrodes and/or different configurations of electrodes.

In Figure 4, the chlorine/chlorine dioxide generator 8 has anode 26 and cathode 24 as in Figures 2 and 3. Neutral (bipolar) electrode 30, however, is provided as two separate electrodes 30a and 30b positioned side-by-side in parallel with respect to the current flow between the anode 26 and membrane 21 in use of the generator 8. When the circuit is energized, chlorine/chlorine dioxide production occurs at anode 26 and at neutral (bipolar) electrodes 30a and 30b.

In Figure 5, chlorine/chlorine dioxide generator 8 has cathode 24 and anode 26 as in Figures 2 and 3. In this embodiment, a first neutral (bipolar) electrode 30 is positioned adjacent to the ion-permeable membrane and a second neutral (bipolar) electrode 30c is positioned between the first bipolar electrode 30 and anode 26 so that the two bipolar electrodes 30, 30c are in effect positioned in series with respect to the current flow between the anode 26 and membrane 21 in use of the generator 8. When the circuit is energized, chlorine/chlorine dioxide production occurs at anode 26 and at each of the neutral (bipolar) electrodes 30 and 30c.

In Figure 6, chlorine/chlorine dioxide generator 8 has an anode 26 which is appreciably smaller in area than cathode 24. Neutral (bipolar) electrodes 30 and 30c are graduated in size between the large size or cathode 24 and the small size or cathode 26.

In Figure 7, chlorine/chlorine dioxide generator 8 has a cathode 24 of relatively small size and anode 26 of substantially larger size. Neutral (bipolar) electrodes 30 and 30e are graduated in size.

In Figure 8, chlorine/chlorine dioxide generator 8 is substantially the same as that shown in Figure 3, except that cathode 24 is a cylindrical rod.

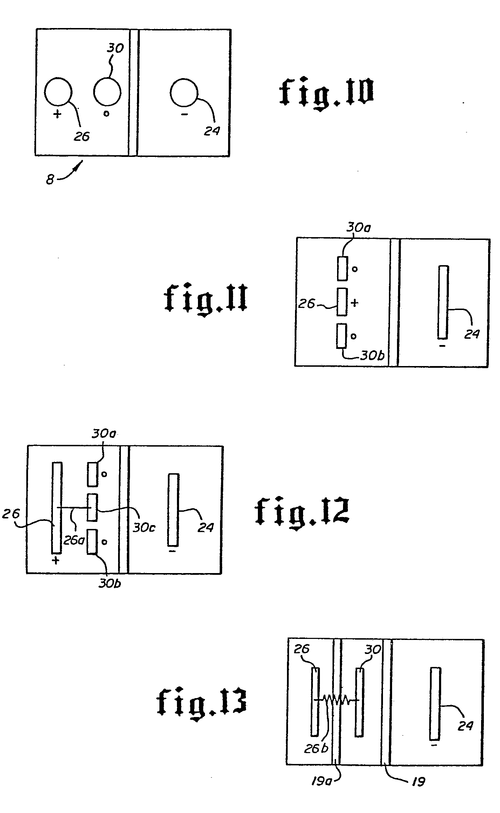

In Figure 9 chlorine/chlorine dioxide generator 8 has a cylindrical rod cathode 24 a flat-plate anode 26 and cylindrical rod neutral (bipolar) electrode 30.

In Figure 10, chlorine/chlorine dioxide generator 8 has cathode 24, anode 26 and neutral (bipolar) electrode 30 all in the form of cylindrical rods. In each of these cases, the cylindrical rod cathode is of a metal such as stainless steel and the anode 26 and neutral (bipolar) electrode 30 are preferably of carbon either in the form of a flat-plate or cylindrical rod as shown.

In the several embodiments having multiple neutral (bipolar) electrodes 30, viz. Figure 4, Figure 5, Figure 6, and Figure 7, the chlorine/chlorine dioxide generation takes place at the anode 26 and at each of the separate neutral (bipolar) electrodes. A plurality of neutral (bipolar) electrodes, two or more, may be used as desired. Chlorine-chlorine dioxide generation takes place at each of the electrodes and the anode. In the embodiment shown in Figure 6 the current flow is focused from a large cathode 24 through sequentially smaller neutral (bipolar) electrodes 30 and 30d to a smaller anode 26 to provide a higher current density. The reverse effect is obtained in Figure 7 where the graduated neutral (bipolar) electrodes and 30 and 30e focus a high current from a small cathode 26 on to a larger anode 26. The embodiments in Figures 8, 9 and 10 illustrate the effect of substitution of cylindrical electrodes in the chlorine/chlorine dioxide generator cell.

In Figure 11, there is shown another embodiment of the invention in which the neutral (bipolar) electrodes 30a and 30b are located adjacent to anode 26 and aligned therewith. In this embodiment, the neutral (bipolar) electrodes are spaced at the same distance from the cathode 24 as anode 26 rather than being in line between the anode and cathode. The neutral (bipolar) electrodes are preferably spaced closely to each side of anode 26 but not in physical contact therewith. When this embodiment is filled with saturated aqueous chloride salt, as in the other embodiments, and energized, the gas evolved at anode 26 contains 1.5 parts chlorine dioxide per part chlorine.

In Figure 12, there is shown still another embodiment of the invention in which a plurality of bipolar electrodes 30a, 30b and 30c are positioned side-by-side between anode 26 and cathode 24. Bipolar electrodes 30a, 30b and 30c are also considered to be positioned in parallel in an electrical sense since they represent parallel paths for current flow between anode 26 and cathode 24. The central bipolar electrode 30c is connected by lead 26a to anode 26 and is thus maintained at the same potential as anode 26, less any voltage drop through the lead, relative to cathode 24. When this embodiment is energized, the output from bipolar electrode 30c is pure chlorine dioxide while the output from anode 26 is a mixture of chlorine and chlorine dioxide.

In Figure 13, there is shown an embodiment of the invention in which bipolar electrode 30 is isolated from both the cathode 24 and anode 26 by walls or separators 19 and 19a, respectively. Anode 26 is connected by a resistor 26a to electrode 30 to maintain the same at a lower potential than the anode relative to cathode 24. When this embodiment is energized, the output from bipolar electrode 30 is pure chlorine while the output from anode 26 is a mixture of a major amount of chlorine dioxide and a minor amount of chlorine.

In Figure 14, there is shown a further embodiment in which electrolytic generator 8 is housed in a cylindrical container 14. Separator wall 19 is cylindrical and divides the generator into anode compartment 22 and cathode compartment 23. Separator wall 19 includes a plurality of ion-permeable membranes 21. Cathode 24 is positioned in compartment 23 and is connected to the D.C. power source. A plurality of anodes 26 are spaced around anode compartment 22. A plurality of neutral (bipolar) electrodes 30 are positioned between anodes 26. Anodes 26 are connected to a common lead or connection to the power source. When energized, this generator produces hydrogen from the cathode compartment 23 and chlorine dioxide and a small amount of chlorine from the anode compartment 22.

In Figure 15, there is shown a still further embodiment of the invention in the form of a double cell. Chlorine/chlorine dioxide generator 8 consists of hollow container 14 having wall 19 completely enclosing the cathode chamber 23. A pair of ion-permeable membranes 21 and 21a are positioned on opposite sides of wall 19. A pair of cathodes 24 and 24a are provided in cathode compartment 23 and are connected to the electric circuit by lead 25. A conduit 9a leads from the end wall portion of wall 19 to conduct hydrogen from cathode compartment 23.

Anode compartment 22 completely surrounds wall 19 and the liquid level completely covers cathode chamber 23. A pair of anodes 26 and 26a are provided. A pair of neutral (bipolar) electrodes 30 and 30f are provided and positioned in direct line between the respective cathodes and anodes and adjacent to the ion-permeable membrane. Chlorine is produced from each of the anodes 26 and 26a and the neutral (bipolar) electrodes 30 and 30f and hydrogen and caustic soda are produced in the cathode compartment 23. Thus the cell is similar to the other basic embodiments, except that the number of electrodes is doubled.

The output of chlorine/chlorine dioxide and hydrogen from the cell in Figure 14 or in any of the other embodiments may be supplied as a gas directly to the mixer 7 in the system of Figure 1 or may be introduced into a stream of flowing water indicated schematically at 13 in Figure 1. The structure required for introducing gases hydrogen and chlorine/chlorine dioxide into water stream 13 is illustrated in Figure 16 where there is shown conduit 13 and an injection tube 35 through which chlorine/chlorine dioxide (and optionally hydrogen) is passed and introduced into a stream of flowing water for introduction into venturi mixer 7 as indicated at 11.

The use of the apparatus described above and illustrated in the various figures of the drawings represents a new and improved method for the preparation of chlorine dioxide and mixtures of chlorine dioxide and chlorine. A variety of experiments were carried out with this apparatus to evaluate some of the parameters of the process.

This invention utilizes the apparatus described above in a novel process for the production of chlorine dioxide and mixtures of chlorine dioxide and chlorine. It was found in the testing of this apparatus that the electrolysis of chloride salt solutions in an electrolytic cell divided into two compartments by a membrane may produce chlorine dioxide or mixtures of chlorine dioxide and chlorine. In such an apparatus, one compartment contains the cathode and other compartment contains a plurality of electrodes some of which have electrical connections as anodes and some of which are electrically unconnected and are thus neutral (bipolar) electrodes. In such an apparatus, the electrolysis of a chloride salt solution produces hydrogen at the cathode and a mixture of chlorine and chlorine dioxide at the anode or anodes and the neutral (bipolar) electrodes. In some arrangements of the apparatus, it is possible to isolate the production of chlorine dioxide and obtain a yield of substantially pure chlorine dioxide. Some of the variables that enter into the production of chlorine dioxide in the process are evaluated in the following experimental examples.

Example I

In this experimental run, the electrolysis unit was essentially as described in Figure 2 of the drawings but using two neutral (bipolar) electrodes as illustrated in Figure 4. The apparatus consisted of a 45 litre container 14 divided by separator 19 which was 0.8 cm. thick and contained an ion exchange membrane 21 having a surface area of 102.6 square cm.

In normal operation, anode compartment 22 is charged with water and an excess of chloride salt, e.g. sodium chloride, and cathode compartment is filled with water. As the electrolysis is carried out, the cathode compartment produces an aqueous solution of sodium hydroxide which becomes more and more concentrated as the reaction goes on. In the experiments that were carried out with this apparatus, anode compartment 22 was filled with a saturated sodium chloride solution and cathode compartment 23 was filled to an equal level with a solution of 30 g/l. sodium hydroxide and water. This arrangement approximates the condition of the system after it has been operated for some time.

In the equipment used in this example, anode 26 was a carbon plate and was mounted 5.0 cm. from divider 19. The neutral (bipolar) electrodes 30a and 30b consisted of two carbon electrodes 2.54 cm. wide×1.27 cm. thick×20.32 cm. high, parallel to anode 26, and spaced 3.18 cm. apart, were mounted between anode 26 and divider 19. In this example, the neutral (bipolar) electrodes were positioned 4 cm. from the anode and 2.8 cm. from the cathode and were adjacent to ion exchange membrane 21.

A partial partition was mounted at the top of the unit in such a manner that the partition extended below the surface of the liquid in the anode compartment 22 so that the gases evolved at anode 26 and neutral (bipolar) electrodes 30a and 30b could be separately removed, without interfering with the flow of current or the circulation of ions between the various electrodes. Vapour discharge lines were provided near the top of the sides of the anode compartment to permit the escape of gases from the vapour phase in the area above the surface of the liquid in the anode compartment. A similar vapour discharge arrangement was provided near the top of the sides of the compartment in the cathode compartment to permit recovery of hydrogen.

A slight negative pressure was maintained on the anode compartment by use of an aspirator connected to a water supply and connected to the vapour discharge lines. The gases produced at the anode and the neutral (bipolar) electrode were separately removed as produced and were passed through a scrubber system to separate the chlorine and chlorine dioxide. A sodium hydroxide scrubber was placed on the suction side of the separators to absorb chlorine and chlorine dioxide produced between runs.

The arrangement for separating chlorine from chlorine dioxide consisted of a separator which was a 100 ml. Nessler tube containing 90 ml. of a 10 g/liter solution of glycine in water followed by a 100 ml. Nessler tube containing 90 ml. of a 50 g/liter solution of potassium iodide which was acidified to pH 1.5 with sulfuric acid.

The glycine reacted with the chlorine to produce the monochloro and dichloro addition product with glycine. The unreacted chlorine dioxide was absorbed in the glycine solution or passed into the second tube where it reacted with the acidified potassium iodide to release iodine.

The glycine solution was analyzed for chlorine and chlorine dioxide by the D.P.D. method 409 E, Standard Methods for Examination of Water and Waste Water, 14th Edition, American Public Health Association. The potassium iodide solution was analyzed for chlorine dioxide by the Iodometric Method, 411 A, Standard Method for Examination of Water and Waste Water.

This analytical technique for separation of chlorine dioxide and chlorine is accepted as accurate when both gases are in the vapour phase as was the case in this study. Analytical results on the efficiency of the separation technique were in general agreement with those reported by Aiteta, et al., Stamford University, EPA Symposium, Cincinnati, Ohio, September 18—20, 1978, and were considered acceptable.

In this example, the electrolysis was carried out at 12 volts and 20 amp. The gases obtained from the neutral (bipolar) electrode 30a and 30b were a mixture of 1.02 parts by weight chlorine dioxide and one part chlorine. The gases obtained from the anode 26 were a mixture of 2.22 parts chlorine dioxide and one part chlorine. The combined gases from anode chamber 22 contained 1.7 parts by weight chlorine dioxide per part chlorine.

A number of additional experiments were carried out using the same apparatus with some variations in location of electrodes, in current density, and in concentration of salt solution to determine the effect of varying these conditions of the electrolytic process.

Examples II and III

In Example II, the apparatus and conditions of Example I were repeated except that the distance between anode 26 and neutral (bipolar) electrodes 30a and 30b was decreased from 4 cm. to 3 cm. In this experiment, there was a production of 1.09 parts chlorine dioxide per part of chlorine at the neutral (bipolar) electrodes 30a and 30b and a production of 4.50 parts chlorine dioxide per part chlorine at the anode 26. In the combined gases evolved from anode compartment 22 there were obtained 3.30 parts chlorine dioxide per part chlorine.

In Example III, the conditions of Example II were repeated but the distance between anode 26 and neutral (bipolar) electrodes 30a and 30b was decreased from 3 cm. to 2 cm. In this experiment, the gases evolved at neutral (bipolar) electrodes 30a and 30b contained 2.19 parts chlorine dioxide per part chlorine. The gases evolved at anode 26 contained 4.70 parts chlorine dioxide per part chlorine. In the combined gases from anode compartment 22 there were 4.08 parts chlorine dioxide per part chlorine. (Again the parts are given by weight).

Comparative Example A

In this experiment, the conditions of Example I were reproduced except that neutral (bipolar) electrodes 30a and 30b were removed from the system. Anode 26 was spaced 6.8 cm. from cathode 24 as in Example I. The system was operated at 12 volts and 15 amp. using a saturated salt (NaCl) solution in anode compartment 22. Under these conditions, the yield from anode 26 was pure chlorine. There was no chlorine dioxide produced in the absence of neutral (bipolar) electrodes 30a and 30b.

Example IV
Effect of current density

A series of runs were made at 12 volts and 20 amp., 10 amp., and 5 amp., respectively. The distance between anode 26 and neutral (bipolar) electrodes 30a and 30b were also varied as in Examples I, II, and III.

The data obtained were erratic and do not correlate well at lower currents. In each case, the total volume of gas evolved was proportional to the current used. Also, the gases evolved in anode compartment 22 were a mixture of chlorine dioxide and chlorine with chlorine dioxide predominating.

Example V
Effect of salinity

A series of experiments were carried out to evaluate the effects of salt concentration on the production of chlorine dioxide. These experiments used a salt solution of 175 g/l which is one-half saturated. In each of the experiments, which involved a variation in spacing of the neutral (bipolar) electrodes and a variation in current density, there was a substantial reduction in the amount of chlorine dioxide and chlorine produced and the proportion of chlorine dioxide was significantly lower although the chlorine dioxide usually predominated.

Example VI

An experiment was carried out using the apparatus illustrated in Figure 13 of the drawings. The electrolytic generator was operated using a saturated salt solution and 20 amp. The voltage drop through resistor 26b was 0.04 V. The electrode 30 had a potential of 8.07 V. relative to the cathode. Anode 26 had a potential of 8.11 V. relative to cathode 24. In this run, no chlorine dioxide was produced at electrode 30 although a substantial amount of chlorine was produced. At anode 26 there was a substantial production of a mixture of chlorine dioxide and chlorine with chlorine dioxide predominating.

Example VII

In this run, an electrolytic generator was used as described in Figure 12. The generator was operated using a saturated salt solution at 16 amp. current. Anode 26 and electrode 30c were maintained at a potential of 9.1 V. relative to cathode 24. Neutral (bipolar) electrodes 30a and 30b were at a potential of 5.84 V. relative to cathode 24 and a potential of 3.23 V. relative to anode 26 and electrode 30c.

Under these conditions, there was a substantial production of approximately equal amounts of chlorine and chlorine dioxide as a mixture at anode 26. There was also a substantial production of gas from electrode 30c and no gas evolved at bipolar electrodes 30a and 30b. The gas evolved at electrode 30c was pure chlorine dioxide with no chlorine or other gases present.

Example VIII

In this experiment, the apparatus in Figure 12 was used but was modified so that electric leads were connected to electrodes 30a and 30b instead of to electrode 30c. The cathode-anode potential was 9.06 V. The potential of the electrically connected electrodes 30a and 30b relative to cathode 24 was also 9.06 V. The potential of the electrically neutral (bipolar) electrode 30c was 3.25 V. relative to anode 26 and 5.77 V. relative to cathode 24.

In this run, the production of gas at cathode 26 was exclusively chlorine. The production of gas at electrodes 30a and 30b was about 30% chlorine dioxide and 70% chlorine.

Comparative Example B

In this run, the apparatus of Figure 12 was used but all three of the electrodes 30a, 30b and 30c were connected by electric leads to anode 26. The generator was operated at a potential of 8.91 V. for the anode 26 and electrodes 30a, 30b and 30c relative to cathode 24 and a current of 17 amp. In this run, the production of gas at cathode 26 and at the electrically connected electrodes 30a, 30b and 30c was entirely chlorine with no chlorine dioxide formed.

From these and other experiments, it has been possible to make some observations with respect to this new and improved electrolytic process for the production of chlorine dioxide and/or mixtures of chlorine dioxide and chlorine. It is believed that this is the first known process for the production of chlorine dioxide by electrolysis of chloride salt. This novel electrolytic process involves the use of an electrolytic cell having two compartments separated by a permeable membrane with the cathode being located in one compartment and the anode in another compartment. The anode compartment contains a plurality of electrodes at least one of which is electrically connected as an anode and one or more of which are electrically unconnected and are called neutral (bipolar) electrodes. The neutral (bipolar) electrodes are not strictly neutral (bipolar) since they have a potential relative to the cathode when the system is energized. This potential results from the flow of electric current through the electrolyte from the anode to the neutral (bipolar) electrodes and thence through the electrolyte to the cathode. The neutral (bipolar) electrodes may be located between the anode and the cathode or may be located to either side of the anode for the best results. If the neutral (bipolar) electrodes are located beyond the anode there is a very substantial loss of efficiency although it is possible in some circumstances to produce some chlorine dioxide. It should be noted that the electrolytic cell may have the compartments vertically disposed, if desired. In such an arrangement wall 19 and membrane 21 extends horizontally and the anode and cathode compartments are located one above the other.

**Claims**

1. A chlorine-containing gas generator com-

17    0 028 925    18

prising an electrolytic cell (8) containing a electrolyte comprising an aqueous solution of a soluble chloride salt and having an anode (26) and a cathode (24) disposed in an anode compartment (22) and a cathode compartment (23), respectively, on either side of a permeable membrane (21) characterized in that the membrane (21) is ion-permeable and the cell (8) includes a bipolar electrode (30) positioned in said anode compartment (22), said bipolar electrode (30) being of a size and shape so as to permit free circulation of the aqueous electrolyte therearound and being disposed so as to be exposed on all sides to said aqueous electrolyte.

2. A generator according to claim 1 in which there is provided a plurality of said bipolar electrodes (30) positioned between said anode (26) and said ion-permeable membrane (21).

3. A generator according to claim 1 in which said ion-permeable membrane (21) is incorporated in a wall (19), which wall (19) surrounds one of said anode and cathode compartments (22, 23) the other of said anode and cathode compartments (22, 23) surrounding said wall (19).

4. A generator according to claim 3 in which said wall (19) includes a pair of oppositely disposed ion-permeable membrane portions (21), and in which are provided two anodes (26) disposed in the anode compartment (22) in alignment with said membrane portions (21), two bipolar electrodes being positioned in said anode compartment, each being positioned between a respective one of said anodes and the adjacent ion-permeable membrane portion.

5. A generator according to any one of claims 1 to 4 in which the ion-permeable membrane (21) has an area not substantially greater than the area required to transport sodium ions at the maximum rate of electrolysis when said anode (26) and said cathode (24) are energized.

6. A generator according to any one of claims 1 to 5 in which said cell is housed in a container (14) having inlet means (17, 18, 16) for the introduction of water and a chloride salt and outlet means (9, 10) for the removal of sodium hydroxide and of hydrogen and chlorine and/or chlorine dioxide gases.

7. A generator according to claim 6 in which said outlet means includes means to collect and mix the gases produced.

8. A generator according to any one of claims 1 to 7 in which the permeable membrane (21) is of a perfluorosulfonic polymer.

9. A generator according to any one of claims 1 to 8 in which the or a said bipolar electrode (30) is disposed in line between the or a said cathode (24) and the or a respective said anode (26).

10. A generator according to any one of claims 1 to 8 in which there are provided a plurality of bipolar electrodes (30) positioned in parallel between the or a said anode (26) and said membrane (21) with respect to current flow between said anode (26) and membrane (21) in use of the generator.

11. A generator according to any one of claims 1 to 8 in which there are provided a plurality of bipolar electrodes (30) positioned in series between the or a said anode (26) and said membrane (21) with respect to current flow between said anode (26) and membrane (21) in use of the generator.

12. A generator according to any one of claims 1 to 11 in which the or each said bipolar electrode (30) is not directly connected to said anode (26).

13. A chlorine-containing gas generator comprising a hollow container (14) having a wall (19) dividing the same into a first and a second compartment (22, 23) said wall including an ion-permeable membrane permitting the flow of cations therethrough, an anode (26) positioned in said first compartment (22), a cathode (24) positioned in said second compartment (23), characterized in that a bipolar electrode is positioned in said first compartment, in line between said anode (26) and said cathode (24) and adjacent to said ion-permeable membrane (21), said bipolar electrode (30) being of a size and shape permitting free circulation of electrolyte therearound and being exposed on all sides to the same aqueous electrolyte, said generator (8) being adapted to be substantially filled with water in both of said compartments (22, 23) and to have a chloride salt added to said first compartment (22) and to have said anode (26) and said cathode (24) connected in a direct current electric circuit, said anode (26) and said cathode (24) being operable when so filled and energized to produce hydrogen at said cathode (24) and chlorine or a mixture of chlorine and chlorine dioxide at said anode (26) and at said bipolar electrode (30), and means forming outlets (10, 9) from said first and said second compartment (22, 23) for conducting chlorine and/or chlorine dioxide and hydrogen therefrom.

14. A chlorinating system comprising a conduit (6, 8b) for conducting water, gas-water mixing means (7) disposed in said conduit (6, 8b) for flow of water through said mixing means (7), and a chlorine-containing gas generator (8) connected to said mixing means for introducing chlorine and/or or chlorine dioxide thereto, characterized in that said generator (8) is a chlorine-containing gas generator (8) according to any one of Claims 1 to 13.

15. A chlorinating system according to Claim 14 in which an outlet means (9, 10) for chlorine and/or chlorine dioxide from said generator includes conduit means (12) for conducting water and for mixing chlorine and/or chlorine dioxide with said water, said conduit means (12) being connected to said mixing means (7) for supplying a mixture of water and chlorine

10

and/or chlorine dioxide thereto in use of said system.

16. A method of producing chlorine and/or chloride dioxide by electrolysis of an aqueous solution of a soluble chloride salt in an electrolytic cell (8) in which the anode (26) and cathode (24) are disposed in anode and cathode compartments (22, 23) on either side of a permeable membrane (21) characterised in that the membrane is ion-permeable and the cell (8) includes a bipolar electrode (30) positioned in said anode compartment (22) and maintained at a potential lower than said anode (26) relative to said cathode (24), said bipolar electrode (30) being of a size and shape such that it is completely surrounded by aqueous electrolyte of the said anode compartment (22), said chlorine dioxide and/or or chlorine being produced in said anode compartment (22).

17. A method of producing chlorine and/or chloride dioxide by electrolysis of an aqueous solution of a soluble chloride salt in the electrolytic cell of a generator (8) according to any one of claims 1 to 13.

18. A method for chlorinating a body of water which comprises providing gas generator (8) comprising a hollow container (14) having a wall (19) dividing the same into two compartments (22, 23) and including an ion-permeable membrane (21) permitting a flow of cations therethrough, a cathode (24) in one of said compartments (23), an anode (26) in the other of said compartments (22), a bipolar electrode (30) in said other compartment (22) positioned between said anode (26) and said membrane (21), said bipolar electrode (30) being of a size and shape permitting free circulation of electrolyte therearound and being exposed on all sides to the same aqueous electrolyte, providing water to said cathode compartment (23), providing an aqueous solution of a chloride salt to said anode compartment (22) to surround said anode (26) and said bipolar electrode (30), passing a predetermined amount of direct current through said water and said aqueous chloride salt solution to produce chlorine and/or chlorine dioxide at said anode (26) and said bipolar electrode (30) and to produce hydrogen and sodium hydroxide at said cathode (24), collecting said chlorine and/or chlorine dioxide, and mixing said chlorine and/or chlorine dioxide at a predetermined rate with part of said body of water and returning the resulting mixture to said body of water.

**Patentansprüche**

1. Chlor enthaltender Gasgenerator, der eine elektrolytische Zelle (8) mit einem Elektrolyten enthält, der eine wässrige Lösung eines löslichen Chloridsalzes enthält und eine Anode (26) und eine Kathode (24) hat, die in einer Anodenkammer (22) bzw. in einer Kathodenkammer (23) auf beiden Seiten einer permeablen Membran (21) angeordnet ist, dadurch gekennzeichnet, daß die Membran (21) ionendurchlässig und die Zelle (8) eine bipolare Elektrode enthält, die in der Anodenkammer (22) angeordnet ist, wobei die bipolare Elektrode (30) eine Größe und eine Gestalt aufweist derart, daß sie eine freie Zirkulation des wässrigen Elektrolyten rings herum gestattet und wobei sie derart angeordnet ist, daß sie an allen Seiten diesem wässrigen Elektrolyten ausgesetzt ist.

2. Generator nach Anspruch 1, dadurch gekennzeichnet, daß er eine Vielzahn von bipolaren Elektroden (30) aufweist, die zwischen der Anode (26) und der ionendurchlässigen Membran (21) angeordnet sind.

3. Generator nach Anspruch 1, dadurch gekennzeichnet, daß die ionendurchlässige Membran (21) mit einer Wand (19) verbunden ist, wobei diese Wand (19) eine der Anoden- bzw. Kthodenkammern (22, 23) umgibt, wohingegen die andere der beiden Anoden- bzw. Kathodenkammern (22, 23) diese Wand (19) umgibt.

4. Generator nach Anspruch 3, dadurch gekennzeichnet, daß diese Wand (19) ein Paar entgegengesetzt angeordneter ionendurchlässiger Membranteile (21) enthält und daß zwei Anoden (26) vorgesehen sind, die in dem Anodengehäuse (22) in einer Linie mit diesen Membranteilen (21) angeordnet sind, wobei zwei bipolare Elektroden in diesem Anodengehäuse angeordnet sind, und jede zwischen einer jeweiligen Anode und dem benachbarten ionendurchlässigen Membranteil angeordnet ist.

5. Generator nach einem der Ansprüche 1 bis 4, dadurch gekennzeichnet, daß die ionendurchlässige Membran (21) eine im wesentlichen nicht größere Zone aufweist, als die Zone, die zum Transport von Natriumionen bei maximaler Elektrolysegeschwindigkeit notwendig ist, sobald die Anode (26) und die Kathode (24) aktiviert werden.

6. Generator nach einem der Ansprüche 1 bis 5, dadurch gekennzeichnet, daß die Zelle in einem Behälter (14) angeordnet ist, der Einlaßvorrichtungen (17, 18, 16) für die Zufuhr von Wasser und eines Chloridsalzes sowie Auslaßvorrichtungen (9, 10) für die Entfernung des Natriumhydroxids, der Wasserstoff-, Chlor- und/oder Chlordioxidgase enthält.

7. Generator nach Anspruch 6, dadurch gekennzeichnet, daß die Auslaßvorrichtungen Einrichtungen umfassen, um die erzeugten Gase zu sammeln und zu mischen.

8. Generator nach einem der Ansprüche 1 bis 7, dadurch gekennzeichnet, daß die permeable Membran (21) aus einem perfluorsulfonsaurem Polymeren besteht.

9. Generator nach einem der Ansprüche 1 bis 8, dadurch gekennzeichnet, daß die eine oder beide bipolaren Elektroden (39) in einer Ausrichtung zwischen der oder den Kathoden (24) und der oder den jeweiligen Anoden (26) angeordnet sind.

10. Generator nach einem der Ansprüche 1 bis 8, dadurch gekennzeichnet, daß eine Vielzahl von bipolaren Elektroden (30) vorgesehen sind, die parallel zwischen der oder den Anoden (26) und der Membran (21) in Bezug auf den Stromfluß zwischen der Anode (26) und der Membran (21) beim Einsatz des Generators angeordnet sind.

11. Generator nach einem der Ansprüche 1 bis 8, dadurch gekennzeichnet, daß eine Vielzahl von bipolaren Elektroden (30) vorgesehen sind, die in Reihe zwischen der oder den Anoden (26) und der Membran (21) in Bezug auf den Stromfluß zwischen der Anode (26) und der Membran (21) beim Einsatz des Generators angeordnet sind.

12. Generator nach einem der Ansprüche 1 bis 11, dadurch gekennzeichnet, daß die oder jede dieser bipolaren Elektroden (30) nicht direkt mit der Anode (26) verbunden sind.

13. Chlor enthaltender Gasgenerator, der ein hohles Gehäuse (14) mit einer Wand (19) enthält, die dasselbe in eine erste und eine zweite Kammer (22, 23) aufteilt, wobei die Wand eine ionendurchlässige Membran mit umfaßt, die den Strom der Kationen zuläßt, und wobei eine Anode (26) in der ersten Kammer (22) und eine Kathode (24) in der zweiten Kammer (23) angeordnet sind, dadurch gekennzeichnet, daß eine bipolare Elektrode in der ersten Kammer in einer Linie zwischen der Anode (26) und der Kathode (24) sowie in Nachbarshaft zu der ionendurchlässigen Membran (21) angeordnet ist, wobei die bipolare Elektrode (30) eine Größe und eine Gestalt aufweist, die eine freie Zirkulation des Elektrolyten ringsherum zuläßt und wobei sie auf allen Seiten demselben wässrigen Elektrolyten ausgesetzt ist, und wobei dieser Generator (8) dafür eingerichtet ist, in beiden Kammern (22, 23) im wesentlichen mit Wasser angefüllt zu sein, ein Chloridsalz aufzuweisen, das in die erste Kammer (22) hinzugegeben wurde, und um eine Anode (26) und eine Kathode (24) zu haben, die in einem direkten elektrischen Stromkreislauf verbunden sind, wobei die Anode (26) und die Kathode (24) einsatzfähig sind, sobald sie gefüllt und aktiviert sind, um Wasserstoff an der Kathode (24) und Chlor oder eine Mischung aus Chlor und Chlordioxid an der Anode (26) und der bipolaren Elektrode (30) zu erzeugen, und daß Auslaßeinrichtungen (10, 9) aus der ersten und der zweiten Kammer (22, 23) vorgesehen sind, um das Chlor und/oder Chlordioxid und den Wasserstoff daraus abzuleiten.

14. Chlorierungssystem mit einer Leitung (6, 8b) zur Wasserführung, mit Einrichtungen (7) zur Gas-Wasser-Mischung, die in dieser Leitung (6, 8b) für den Wasserstrom durch diese Mischeinrichtungen (7) angeordnet sind, und mit einem Chlor enthaltenden Gasgenerator (8) der mit diesen Mischeinrichtungen in Verbindung steht, zur Einspeisung von Chlor und/oder Chlordioxid-Gasen, dadurch gekennzeichnet, daß der Generator (8) ein Chlor enthaltender Gasgenerator (8) nach einem der Ansprüche 1 bis 13 ist.

15. Chlorierungssystem nach Anspruch 14, dadurch gekennzeichnet, daß eine Auslaßeinrichtung (9, 10) für Chlor und/oder Chlordioxid aus diesem Generator Leitungseinrichtungen (12) zur Leitung des Wassers und zum Mischen des Chlors und/oder Chlordioxids mit Wasser mit umfaßt, wobei diese Leitungseinrichtungen (12) mit den Mischeinrichtungen in Verbindung stehen, um eine Mischung aus Wasser und Chlor und/oder Chlordioxid beim Einsatz des Systems dafür zu liefern.

16. Verfahren zur Erzeugung von Chlor und/oder Chlordioxid mittels Elektrolyse einer wässrigen Lösung eines löslichen Chloridsalzes in einer elektrolytischen Zelle (8), in der die Anode (26) und die Kathode (24) in einer Anoden- bzw. Kathodenkammer (22, 23) auf beiden Seiten einer permeablen Membran (24) angeordnet sind, dadurch gekennzeichnet, daß die Membran ionendurchlässig ist und die Zelle (8) eine bipolare Elektrode (30) mit umfaßt, die in der Anodenkammer (22) angeordnet ist und bei einem Potential gehalten wird, das niedriger ist als das der Anode (26) bezogen auf die Kathode (24), wobei die bipolare Elektrode eine derartige Größe und Gestalt aufweist, daß sie vollständig von einem wässrigen Elektrolyten in dieser Anodenkammer (22) umgeben wird, und wobei das Chlordioxid und/oder Chlor in der Anodenkammer (22) erzeugt wird.

17. Verfahren zum Erzeugen von Chlor und/oder Chlordioxid mittels Elektrolyse einer wässrigen Lösung eines löslichen Chloridsalzes in der elektrolytischen Zelle eines Generators (8) nach einem der Ansprüche 1 bis 13.

18. Verfahren zum Chlorieren von Wasser, dadurch gekennzeichnet, daß man einen Gasgenerator (8) liefert, der ein hohles Gehäuse (14) mit einer Wand (19) enthält, der dasselbe in zwei Kammern (22, 23) aufteilt und eine ionendurchlässige Membran (21), die einen Strom von Kationen hindurch zuläßt, eine Kathode (24) in einer der beiden Kammern (23), eine Anode (26) in der anderen der beiden Kammern (22), eine bipolare Elektrode (30) in dieser anderen Kammer (22), die zwischen der Anode (26) und der Membran (21) angeordnet ist, mit umfaßt, wobei die bipolare Elektrode (30) von einer Größe und einer Gestalt ist, die eine freie Zirkulation des Elektrolyten rings herum und das Aussetzen mit demselben wässrigen Elektrolyten nach allen Seiten hin zuläßt, daß man Wasser zu der Kathodenkammer (23) und eine wässrige Lösung eines Chloridsalzes zu der Anodenkammer (22) zuführt, um die Anode (26) und die bipolare Elektrode (30) zu umspülen, daß man eine vorherbestimmte Menge eines Gleichstroms durch das Wasser und die wässrige Chloridsalzlösung leitet, um Chlor und/oder Chlordioxid an der Anode (26) und der bipolaren Elektrode (30) zu erzeugen und um Wasserstoff sowie Natriumhydroxid an der Kathode (24) zu erzeugen, daß man Chlor und/oder Chlordioxid sammelt, das Chlor und/oder das Chlordioxid mit einer vorherbestimmten Menge mit einem Teil des Wassers mischt und die erhaltene Mischung zu dem Wasser zurückführt.

**Revendications**

1. Générateur de gaz contenant du chlore comprenant une cellule électrolytique (8) contenant un électrolyte comprenant une solution aqueuse d'un chlorure soluble et possédant une anode (26) et une cathode (24) disposées, respectivement, dans un compartiment anodique (22) et un compartiment cathodique (23), de chaque côté d'une membrane perméable (21), caractérisé en ce que la membrane (21) est perméable aux ions et la cellule (8) comprend une électrode bipolaire (30) placée dans ledit compartiment anodique (22), ladite électrode bipolaire (30) étant d'une dimension et d'une forme de façon à permettre la libre circulation de l'électrolyte aqueux tout autour et étant placée de manière à être exposée de tous les côtés audit électrolyte aqueux.

2. Générateur selon la revendication 1, dans lequel il est fourni une pluralité desdites électrodes bipolaires (30) placées entre ladite anode (26) et ladite membrane perméable aux ions (21).

3. Générateur selon la revendication 1 dans lequel ladite membrane perméable aux ions (21) est incorporée dans une paroi (19), laquelle paroi (19) entoure l'un desdits compartiments anodique et cathodique (22, 23) l'autre desdits compartiments anodique et cathodique (22, 23) entourant ladite paroi (19).

4. Générateur selon la revendication 3 dans lequel ladite paroi (19) comprend une paire de parties de membrane perméables aux ions (21) disposées en sens inverse, et dans lequel sont fournies deux anodes (26) disposées dans le compartiment anodique (22) en alignement avec lesdites parties de membrane (21), deux électrodes bipolaires étant placées dans ledit compartiment anodique, chacune étant placée entre l'une respective desdites anodes et la partie de membrane adjacente perméable aux ions.

5. Générateur selon l'une quelconque des revendications 1 à 4, dans lequel la membrane perméable aux ions (21) a une surface non sensiblement supérieure à la surface requise pour transporter les ions sodium à la vitesse maximum de l'électrolyse lorsque ladite anode (26) et ladite cathode (24) sont mises en fonctionnement.

6. Générateur selon l'une quelconque des revendications 1 à 5 dans lequel ladite cellule est logée dans un récipient (14) possédant des moyens d'admission (17, 18, 16) pour l'introduction de l'eau et d'un chlorure et des moyens de sortie (9, 10) pour l'élimination de l'hydroxyde de sodium et des gaz hydrogène et chlore et/ou dioxyde de chlore.

7. Générateur selon la revendication 6 dans lequel ledit moyen de sortie comprend un moyen pour recueillir et mélanger les gaz produits.

8. Générateur selon l'une quelconque des revendications 1 à 7 dans lequel la membrane perméable (21) est un polymère perfluorosulfonique.

9. Générateur selon l'une quelconque des revendications 1 à 8 dans lequel la ou une dite électrode bipolaire (30) est placée en ligne entre la ou une dite cathode (24) et la ou une dite anode respective (26).

10. Générateur selon l'une quelconque des revendications 1 à 8 dans lequel il est fourni une pluralité d'électrodes bipolaires (30) placées en parallèle entre la ou une dite anode (26) et ladite membrane (21) par rapport au flux de courant utilisé entre ladite anode (26) et ladite membrane (21) dans l'utilisation du générateur.

11. Générateur selon l'une quelconque des revendications 1 à 8 dans lequel il est fourni une pluralité d'électrodes bipolaires (30) placées en série entre la ou une dite anode (26) et ladite membrane (21) par rapport au flux de courant entre ladite anode (26) et ladite membrane (21) dans l'utilisation dudit générateur.

12. Générateur selon l'une quelconque des revendications 1 à 11 dans lequel la ou chaque dite électrode bipolaire (30) n'est pas directement reliée à ladite anode (26).

13. Générateur de gaz contenant un chlore comprenant un récipient creux (14) possédant une paroi (19) le divisant en un premier et un second compartiment (22, 23) ladite paroi comprenant une membrane perméable au ions permettant l'écoulement de cations à travers elle, une anode (26) placée dans ledit premier compartiment (22), une cathode (24) placée dans ledit second compartiment (23), caractérisé en ce qu'une électrode bipolaire est placée dans ledit premier compartiment, en ligne entre ledit anode (26) et ladite cathode (24) et, adjacente à ladite membrane perméable aux ions (21), ladite électrode bipolaire (30) étant d'une dimension et d'une forme permettant la libre circulation de l'électrolyte tout autour et étant exposée sur tous les côtés au même électrolyte aqueux, ledit générateur (8) étant adapté pour être sensiblement rempli avec de l'eau dans les deux dits compartiments (22, 23) et pour qu'on ajoute un chlorure audit premier compartiment (22) et pour que ladite anode (26) et ladite cathode (24) soient reliées dans un circuit électrique de courant continu, ladite anode (26) et ladite cathode (24) pouvant fonctionner lorsqu'ainsi rempli et mis en fonctionnement pour produire de l'hydrogène à ladite cathode (24) et du chlore ou un mélange de chlore et de dioxyde de chlore à ladite anode (26) et à ladite électrode bipolaire (30), et des moyens de sortie (10, 9) dudit premier et dudit second compartiments (22, 23) pour en extraire le chlore et/ou le dioxyde de chlore et l'hydrogène.

14. Système de chloruration comprenant une conduite (6, 8b) pour diriger l'eau, des moyens de mélange gaz-eau (7) disposés dans ladite conduite (6, 8b) pour l'écoulement dans ledit moyen de mélange (7), et un générateur (8) de gaz contenant du chlore relié audit moyen de mélange pour y introduire le chlore et/ou le dioxyde de chlore, caractérisé en ce que ledit générateur (8) est un générateur de gaz contenant du chlore (8) selon l'une quelconque des revendications 1 à 13.

15. Système de chloruration selon la revendication 14 dans lequel un moyen de sortie (9, 10) pour le chlore et/ou le dioxyde de chlore dudit générateur comprend un moyen de conduite (12) pour diriger l'eau et pour mélanger le chlore et/ou de dioxyde de chlore avec ladite eau, ledit moyen de conduite (12) étant relié audit moyen de mélange (7) pour lui fournir un mélange d'eau et de chlore et/ou de peroxyde de chlore dans l'utilisation dudit système.

16. Procédé pour produire du chlore et/ou du dioxyde de chlore par électrolyse d'une solution aqueuse d'un chlorure soluble dans une cellule électrolytique (8) dans laquelle l'anode (26) et la cathode (24) sont placées dans des compartiments anodique et cathodique (22, 23) de chaque côté d'une membrane perméable (21), caractérisé en ce que la membrane est perméable aux ions et que la cellule (8) comprend une électrode bipolaire (30) placée dans ledit compartiment anodique (22) et maintenue à un potentiel inférieur à celui de ladite anode (26) par rapport à ladite cathode (24), ladite électrode bipolaire (30) étant d'une dimension et d'une forme telles qu'elle est complètement entourée par l'électrolyte aqueux dudit compartiment anodique (22), lesdits dioxyde de chlore et/ou chlore étant produits dans ledit compartiment anodique (22).

17. Procédé de production du chlore et/ou du dioxyde de chlore par électrolyse d'une solution aqueuse d'un chlorure soluble dans la cellule électrolytique d'un générateur (8) selon l'une quelconque des revendications 1 à 13.

18. Procédé pour chlorurer une masse d'eau qui consiste à fournir un générateur de gaz (8) comprenant un récipient creux (14) possédant une paroi (19) le partageant en deux compartiments (22, 23) et comprenant une membrane perméable aux ions (21) permettant un écoulement de cations à travers elle, une cathode (24) dans un desdits compartiments (23), une anode (26) dans l'autre desdits compartiments (22), une électrode bipolaire (30) dans ledit autre compartiment (22) placée entre ladite anode (26) et ladite membrane (21), ladite électrode bipolaire (30) étant d'une dimension et d'une forme permettant la libre circulation de l'électrolyte tout autour et étant exposée de tous les côtés au même électrolyte aqueux, à fournir de l'eau audit compartiment cathodique (23), à fournir une solution aqueuse de chlorure audit compartiment anodique (22) pour entourer ladite anode (26) et ladite électrode bipolaire (30), à faire passer une quantité prédéterminée de courant continu dans ladite eau et ladite solution saline aqueuse de chlorure pour produire du chlore et/ou du dioxyde de chlore à ladite anode (26) et à ladite électrode bipolaire (30) et pour produire de l'hydrogène et de l'hydroxyde de sodium à ladite cathode (24), à recueillir ledit chlore et/ou ledit dioxyde de chlore, et à mélanger ledit chlore et/ou ledit dioxyde de chlore à un taux prédéterminé avec une partie de ladite masse d'eau et à renvoyer le mélange résultant dans ladite masse d'eau.

0 028 925

fig.1

fig.2

fig.3

1

fig.4

fig.5

fig.6

fig.7

fig.8

fig.9

fig.10

fig.11

fig.12

fig.13

fig.14

fig.15

fig.16